# EUROPÄISCHE PATENTANMELDUNG

(11) **EP 2 811 422 A1**
(43) Veröffentlichungstag der Anmeldung: **10.12.2014**
(21) Anmeldenummer: 14170715.8
(22) Anmeldetag: 01.06.2014
(51) Int. Cl.: G06K 9/00, G06K 9/03, G06K 9/72

(54) **Verfahren zum gleichzeitigen Darstellen einer Graphik einer handschriftlichen Zeichenfolge und einer Maschineninterpretation der Zeichenfolge, Computerprogramm zur Implementierung des Verfahrens und Computersystem mit einem solchen Computerprogramm**

(30) Priorität: 05.06.2013 DE 102013210449
(71) Anmelder: SE Systemhaus Emsdetten GmbH & Co. KG, 48282 Emsdetten (DE)
(72) Erfinder: Jürgens, Ulrich, 48282 Emsdetten (DE)
(74) Vertreter: Werner & ten Brink

(57) **Zusammenfassung**

Die Erfindung ist ein Verfahren zum gleichzeitigen Darstellen einer Graphik (30) einer handschriftlichen Zeichenfolge und einer Maschineninterpretation (32) der Graphik (30) mittels eines Anzeigegeräts (48) eines Computersystems (40), wobei die Anzeige der Maschineninterpretation (32) über oder unter der Anzeige der Graphik (30) der handschriftlichen Zeichenfolge erfolgt, wobei die Maschineninterpretation (32) mittels des Computersystems (40) editierbar ist und beim Editieren an einer jeweiligen Eingabeposition ein Textcursor (54) dargestellt wird und wobei in der Graphik (30) der handschriftlichen Zeichenfolge an einer mit der Eingabeposition korrespondierenden Stelle ein Graphikcursor (56) angezeigt wird, sowie ein Computerprogramm (46) zur Implementierung des Verfahrens und schließlich auch ein Computersystem (40), das als Mittel zur Durchführung des Verfahrens ein in einen Speicher (44) des Computersystems (40) geladenes derartiges Computerprogramm (46) umfasst.

## Beschreibung

Die Erfindung betrifft zuvorderst ein Verfahren zum gleichzeitigen Darstellen einer Graphik einer handschriftlichen Zeichenfolge und einer Maschineninterpretation der Zeichenfolge mittels eines Anzeigegeräts eines Computersystems. Das Verfahren ist besonders zur Verwendung bei der automatischen Verarbeitung handschriftlich ausgefüllter Formulare vorgesehen. Bei einer bereits bekannten automatischen Verarbeitung handschriftlich ausgefüllter Formulare wird das jeweilige Formular ganz oder abschnittsweise gescannt, so dass sich eine Graphik des Formulars mit den jeweiligen handschriftlichen Eintragungen oder eine Graphik oder mehrere Graphiken eines von dem Formular umfassten Textfeldes bzw. mehrerer von dem Formular umfasster Textfelder und den dortigen handschriftlichen Eintragungen ergibt. Solche Graphiken können in an sich bekannter Art und Weise einer Texterkennung unterzogen werden, so dass sich aus den ursprünglichen Graphikdaten elektronisch verarbeitbare Informationen in Form von Zeichenfolgen, zum Beispiel eine Zeichenfolge, die ein Kalenderdatum darstellt, oder eine Zeichenfolge, die eine Kontonummer darstellt und so weiter, ergeben. Diese Zeichenfolge ist eine Maschineninterpretation der ursprünglich handschriftlichen Zeichenfolge und wird im Folgenden mitunter auch nur kurz als Maschineninterpretation bezeichnet.

Eine Generierung einer Maschineninterpretation zu einer handschriftlichen Zeichenfolge ist nicht immer eindeutig und nicht immer fehlerfrei möglich. Deshalb ist zum Teil eine Kontrolle der generierten Maschineninterpretation oder der generierten Maschineninterpretationen erforderlich. Eine Kontrolle und gegebenenfalls eine Korrektur einer generierten Maschineninterpretation ist jedenfalls dann erforderlich, wenn sich bei der Generierung der Maschineninterpretation bereits ergibt, dass zumindest eines der handschriftlich in das Formular eingetragenen Zeichen nicht mit hinreichender Sicherheit erkannt wurde.

Eine solche Überprüfung einer Maschineninterpretation erfordert hohe Konzentration und ist dennoch, vor allem wenn routinemäßig eine Vielzahl von Überprüfungen durchgeführt wird, fehleranfällig. Dabei ist beobachtet worden, dass die Fehleranfälligkeit einerseits proportional zu der Zeitdauer, während derer das jeweilige Personal solche Prüfungen vornimmt, andererseits aber auch proportional zur Länge der zu prüfenden Textfelder und resultierenden Maschineninterpretationen ansteigt.

In diesem Zusammenhang ist darauf hinzuweisen, dass zu Formularen, die auf die oben skizzierte Art und Weise elektronisch verarbeitet werden und anschließend eventuell eine Prüfung/Korrektur erfordern, auch Formulare gehören, wie sie im Bankwesen verwendet werden, insbesondere Formulare in Form sogenannter Überweisungsträger. Bekanntlich sind auf Überweisungsträgern Daten einzutragen, welche zumindest die Bankverbindung der begünstigten Partei oder die Bankverbindung der begünstigten Partei und die eigene Bankverbindung spezifizieren. Zu solchen Daten gehört bekanntlich eine Bankleitzahl und eine Kontonummer, so dass sich eine handschriftlich eingetragene Ziffernfolge ergibt. Bankleitzahl und Kontonummer sind bisher für sogenannte Inlandsüberweisungen ausreichend. Für Auslandsüberweisungen erfolgt die Spezifikation der Bankverbindung mittels IBAN (International Bank Account Number) und BIC (Business Identifier Code). Zukünftig ist auch bei Inlandsüberweisungen eine Spezifikation der jeweiligen Bankverbindung mittels IBAN und BIC erforderlich. Speziell die IBAN ist im Vergleich zu einer Kontonummer deutlich länger, denn sie umfasst zum Beispiel für Deutschland die bisherige Bankleitzahl und die bisherige Kontonummer, wobei zudem die Kontonummer innerhalb der IBAN um führende Nullen ergänzt wird, damit sich das für die IBAN vorgeschriebene Format ergibt.

Aufgrund der erhöhten Länge der IBAN sowie aufgrund einzelner eventuell mehrfach hintereinander vorkommender Zeichen, insbesondere Nullen, innerhalb der IBAN ist davon auszugehen, dass die bisher schon notwendige Prüfung einer automatischen Verarbeitung solcher Formulare in Zukunft noch größere Bedeutung erhalten wird und dass die Überprüfung mehr Zeit in Anspruch nehmen wird.

Eine Aufgabe der vorliegenden Erfindung besteht entsprechend darin, ein Hilfsmittel zu schaffen, das Personal, das mit solchen Prüfungsaufgaben befasst ist, unterstützt.

Diese Aufgabe wird erfindungsgemäß mit einem Verfahren mit den Merkmalen des Anspruchs 1 gelöst. Das Verfahren sieht eine gleichzeitige Darstellung einer Graphik einer handschriftlichen Zeichenfolge und einer Maschineninterpretation der Graphik mittels eines Anzeigegeräts eines Computersystems vor. Das oben erwähnte Hilfsmittel ist also sowohl das Computersystem, mittels dessen ein solches Verfahren ausgeführt wird, wie auch das Verfahren selbst. Bei dem Verfahren ist vorgesehen, dass die Anzeige der Maschineninterpretation in räumlicher Nähe zu der Anzeige der Graphik der handschriftlichen Zeichenfolge, insbesondere über oder unter der Anzeige der Graphik, erfolgt, dass die Maschineninterpretation mittels des Computersystems editierbar ist und beim Editieren an einer jeweiligen Eingabeposition ein Textcursor dargestellt wird und dass in der Graphik der handschriftlichen Zeichenfolge an einer mit der Eingabeposition korrespondierenden Stelle ein Graphikcursor angezeigt wird. Die gleichzeitige Darstellung der Graphik der handschriftlichen Zeichenfolge und der resultierenden Maschineninterpretation wird also durch eine gleichzeitige Darstellung eines Textcursors in Bezug auf die Maschineninterpretation und eines Graphikcursors in Bezug auf die Graphik der handschriftlichen Zeichenfolge ergänzt. Indem der Textcursor und der Graphikcursor jeweils zusammengehörige Abschnitte der Maschineninterpretation und der zugrunde liegenden Graphik bezeichnen, ist für das Prüfpersonal eine enorme Unterstützung erreicht, die insbesondere darin besteht, dass ein einzelnes Zeichen der Graphik mit einem unmittelbar als zugehörig erkennbaren Zeichen der Maschineninterpretation verglichen werden kann. Positionsfehler, wie Sie ansonsten häufig, vor allem nach längerem Arbeiten, unvermeidlich sind, werden so vermieden oder zumindest deutlich reduziert.

Bei einer Ausführungsform des Verfahrens wird beim Editieren der Maschineninterpretation und beim Verändern der Eingabeposition der Textcursor an der jeweils neuen Eingabeposition und der Graphikcursor an der mit der neuen Eingabeposition korrespondierenden Stelle angezeigt. Die synchrone Markierung zusammengehöriger Bereiche der Graphik und der Maschineninterpretation beschränkt sich dann nicht nur auf eine einmalige Kennzeichnung eines einzelnen Zeichens, zum Beispiel eine Kennzeichnung eines nicht mit ausreichender Sicherheit erkannten Zeichens, sondern steht dauerhaft während des Editieren des jeweiligen Eingabefeldes mit der Maschineninterpretation zur Verfügung, so dass der Benutzer in besonders einfacher Art und Weise jedes Zeichen der Graphik mit dem zugehörigen Zeichen in der Maschineninterpretation vergleichen und gegebenenfalls Korrekturen vornehmen kann.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bezüglich einer zur Ausführung des Verfahrens und seiner nachfolgend mit weiteren Details beschriebenen Ausgestaltungen wird die oben genannte Aufgabe erfindungsgemäß gelöst mittels eines Computersystems, in dessen Speicher ein Computerprogramm zur Implementierung des Verfahrens und gegebenenfalls einzelner oder mehrerer Ausgestaltungen geladen ist. Vorteilhafte Ausgestaltungen des Computersystems ergeben sich aus einer Umsetzung einzelner oder mehrerer Merkmale des Anspruchs 1 und der darauf rückbezogenen Ansprüche.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Bei einer Ausführungsform des Verfahrens ist die Maschineninterpretation das Ergebnis eines Texterkennungsverfahrens und das Texterkennungsverfahren liefert zu der Graphik der handschriftlichen Zeichenfolge zumindest einen Datensatz oder eine Folge von Datensätzen zurück. Der oder jeder Datensatz umfasst zumindest ein erstes Datum zu einem in der Graphik jeweils erkannten Zeichen und ein zweites Datum mit einer Positionsinformation zu einem dem erkannten Zeichen zugrunde liegenden Abschnitt der Graphik. Der Graphikcursor wird dann anhand der Positionsinformation eines solchen Datensatzes angezeigt. Die Auswertung des zumindest einen Datensatzes und die Auswertung der davon jeweils umfassten Positionsinformation sowie die Darstellung des Graphikcursors erfolgt dabei unter Kontrolle des Computerprogramms bei dessen Ausführung mittels des Computersystems. Die Verwendung solcher Datensätze und davon jeweils umfasster Positionsinformationen ist eine Grundlage für eine besonders effiziente Gestaltung eines solchen Computerprogramms. Das Computerprogramm lässt sich auf diese Weise nicht nur leichter erstellen, sondern wird auch leichter wartbar und ist damit leichter an zukünftige Erfordernisse anpassbar.

Neben der synchronen Darstellung von Text- und Graphikcursor lässt sich eine besondere Unterstützung des Prüfpersonals dadurch erreichen, dass die Maschineninterpretation und die zugrunde liegende Graphik in einer Art und Weise am Anzeigegerät des Computersystems dargestellt werden, die eine Zuordnung einzelner Abschnitte der Graphik und der dadurch repräsentierten Zeichen der ursprünglich handschriftlichen Eingabe sowie der resultierenden Zeichen der Maschineninterpretation erleichtert. Eine in diesem Sinne hilfreiche Darstellung besteht darin, dass Graphik und Maschineninterpretation übereinander und mit einer übereinstimmenden Breite dargestellt werden. Entsprechend werden bei einer Ausführungsform des Verfahrens eine Breite einer Darstellung der Maschineninterpretation auf dem Anzeigegerät und eine Breite der Graphik der handschriftlichen Eingabe ermittelt, wobei mit der ermittelten Breite der Darstellung der Maschineninterpretation und der ermittelten Breite der Graphik der handschriftlichen Eingabe eine Skalierung der Graphik der handschriftlichen Eingabe erfolgt. Abschließend wird die skalierte Graphik der handschriftlichen Eingabe mittels des Ausgabegeräts über oder unter der Darstellung der Maschineninterpretation angezeigt. Eine Breite der Graphik der handschriftlichen Eingabe ergibt sich zum Beispiel, indem in den oben erwähnten Datensätzen eine kleinste und eine größte Positionsinformation gesucht und daraus die Breite ermittelt wird.

Eine solche Skalierung der Graphik ist bereits außerordentlich hilfreich. Die Skalierung der Graphik anhand ihrer gesamten Breite ist jedoch dann nicht optimal, wenn bei der der Graphik zugrunde liegenden handschriftlichen Eingabe einzelne Zeichen besonders breit oder besonders schmal geschrieben wurden. Eine Ausführungsform des Verfahrens, die auch bei einer solchen Situation zufriedenstellende Ergebnisse im Hinblick auf eine Unterstützung des Prüfpersonals liefert, zeichnet sich dadurch aus, dass jeder einem aufgrund der Texterkennung resultierenden Datensatz zugrunde liegende Abschnitt der Graphik der handschriftlichen Eingabe einzeln in Bezug auf eine Breite der Darstellung eines Zeichens der Maschineninterpretation skaliert wird. Dann wird ein Abschnitt der Graphik, der ein besonders breit geschriebenes Zeichen repräsentiert, verkleinert, zumindest in horizontaler Richtung verkleinert, so dass sich bei der Darstellung dieses Abschnitts der Graphik eine Breite ergibt, wie sie einer Breite eines Zeichens der Maschineninterpretation entspricht. Genauso wird ein Abschnitt der Graphik, der ein besonders schmal geschriebenes Zeichen repräsentiert, vergrößert, zumindest in horizontaler Richtung vergrößert, so dass sich bei der Darstellung dieses Abschnitts der Graphik ebenfalls eine Breite ergibt, wie sie einer Breite eines Zeichens der Maschineninterpretation entspricht.

Weil eine Überprüfung von zunächst elektronisch ausgewerteten Formularen durch Prüfpersonal normalerweise nur dann erforderlich ist, wenn es bei der elektronischen Auswertung der ursprünglich handschriftlichen Eingaben zu Fehlern oder einer nicht ausreichend sicheren Erkennung einzelner oder mehrerer Zeichen gekommen ist, ist es üblich, bei einer automatischen Texterkennung die jeweils erkannten Zeichen oder zumindest solche Zeichen, die nicht eindeutig erkennbar waren, mit einem eine Plausibilität des jeweiligen Erkennungsergebnisses ausdrückenden Datum, insbesondere einem entsprechenden Zahlenwert, zu versehen. Dann bleibt erkennbar, welches Zeichen oder welche Zeichen eine besondere Aufmerksamkeit des Prüfpersonals erfordern. Bei einer Ausführungsform des Verfahrens werden dementsprechend Zeichen mit einer Plausibilität unterhalb eines vorgegebenen oder vorgebbaren Schwellwerts in der Anzeige der Maschineninterpretation und/oder der Anzeige der Graphik hervorgehoben dargestellt. Vorteilhaft kann dabei zusätzlich vorgesehen sein, dass als anfängliche Eingabeposition innerhalb eines Eingabefeldes zum Editieren der Maschineninterpretation die Position eines ersten Zeichens mit einer Plausibilität unterhalb des Schwellwerts verwendet wird. Die graphische Hervorhebung des oder jedes Zeichens, das nicht mit einer ausreichenden Plausibilität erkannt wurde, macht das oder jedes Zeichen, das einer besonderen Prüfung bedarf, für das Prüfpersonal leicht identifizierbar. Wenn der Textcursor- und damit synchron auch der Graphikcursor - durch eine entsprechende Vorgabe der Eingabeposition gleich auf das erste Zeichen mit einer Plausibilität unterhalb des Schwellwerts gestellt wird, kann das Personal unmittelbar mit einer eventuell erforderlichen Korrektur des nicht mit hinreichender Sicherheit erkannten Zeichens beginnen.

Nicht mit hinreichender Sicherheit erkannte Zeichen können auch aufgrund von redundanten Informationen innerhalb des Formulars eine erhöhte Plausibilität erhalten und/oder nicht mit hinreichender Sicherheit erkannte Zeichen können aufgrund solcher redundanter Informationen durch ein passendes Zeichen ersetzt werden. Redundante Informationen bei einem Formular in Form eines Überweisungsträgers sind zum Beispiel Länderkennzeichen, die innerhalb der einzelnen Textfelder des Formulars an bestimmten Stellen vorkommen. Wenn zum Beispiel in einem ersten Textfeld an einer Position, an der ein Länderkennzeichen erwartet wird, ein Zeichen nicht mit hinreichender Sicherheit erkannt wurde, an einer anderen Stelle des Formulars das Länderkennzeichen und die davon umfassten Zeichen aber mit hinreichender Sicherheit erkannt wurden, kann auf Basis des erkannten Länderkennzeichens die Plausibilität eines nicht mit hinreichender Sicherheit erkannten Zeichens erhöht werden oder ein nicht mit hinreichender Sicherheit erkanntes Zeichen kann verworfen und durch ein zu dem jeweiligen Ländercode passendes Zeichen ersetzt werden. Das Länderkennzeichen ist ein besonders einfaches Beispiel einer redundanten Information. Redundante Informationen können sich auch auf Basis erwarteter Formate ergeben, zum Beispiel müssen die letzten Stellen einer IBAN stets numerische Zeichen sein. Damit kommt ein "B" nicht als Interpretationsergebnis in Betracht und es muss sich folglich mit einer erhöhten Plausibilität bei dem fraglichen Zeichen eher um eine "8" handeln. Für solche aufgrund redundanter Informationen resultierende Zeichen der Maschineninterpretation kann vorgesehen sein, dass diese zur abschließenden Prüfung durch das jeweilige Prüfpersonal bei der Darstellung am Anzeigegerät des Computersystems graphisch hervorgehoben werden, gegebenenfalls mit einer zur entsprechenden Anzeige solcher Zeichen, die in jedem Fall nicht mit ausreichender Sicherheit erkannt werden konnten, unterschiedlichen Darstellung.

Bei einer nochmals weiteren Ausführungsform des Verfahrens werden aus einer Datenbasis Informationen zu einem erwarteten Format der jeweiligen handschriftlichen Zeichenfolge abgerufen und bei der Anzeige der Graphik einer handschriftlichen Zeichenfolge und/oder der zugehörigen Maschineninterpretation wird eine dem jeweiligen Format entsprechende Hervorhebung angezeigt. Auf diese Weise können zum Beispiel bei einer Eingabe eines Kalenderdatums die zur Spezifikation der Jahreszahl zusammengehörigen Ziffern oder die Positionen, an denen solche Ziffern eingetragen werden können, mit einer gemeinsamen Hintergrundfarbe angezeigt oder in sonst geeigneter Art und Weise hervorgehoben werden. Für Daten auf einem Formular in Form eines Überweisungsträgers gilt dies entsprechend zum Beispiel für die Zeichen einer IBAN, die eine Bankleitzahl darstellen, und/oder die Zeichen, die eine Kontonummer darstellen oder die entsprechenden Positionen in einem Eingabefeld.

Wenn die Information zu dem erwarteten Format anhand der jeweiligen Maschineninterpretation abgerufen und beim Editieren der Maschineninterpretation fortwährend aktualisiert wird, ergibt sich auch eine Anpassung des angezeigten Formats, wenn sich das Format aufgrund einer Korrektur der Maschineninterpretation ändert. Wenn zum Beispiel bei einer handschriftlich eingetragenen IBAN das zweite Zeichen der Senderkennung nicht korrekt erkannt wird und die Maschineninterpretation anstelle von "DE" zunächst die Länderkennung "DK" umfasst, erfolgt zunächst eine Anzeige von Maschineninterpretation und/oder Graphik mit einer Hervorhebung des Formats, wie dies für eine dänische IBAN vorgesehen ist. Wenn dann innerhalb der Maschineninterpretation die Korrektur erfolgt und diese dann als Senderkennung "DE" umfasst, wird die Darstellung des Formats beim Editieren fortwährend aktualisiert und es erfolgt schließlich die Darstellung des Formats, wie dies für eine deutsche IBAN vorgesehen ist.

Die oben genannte Aufgabe wird auch mit einem Computersystem gelöst, das nach dem Verfahren wie hier und im Folgenden beschrieben arbeitet und dazu Mittel zur Durchführung des Verfahrens umfasst. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch ein Computersystem, in dessen Speicher als Mittel zur Durchführung des Verfahrens und seiner Ausgestaltungen ein solches Computerprogramm geladen oder ladbar ist.

Die mit der Anmeldung eingereichten Patentansprüche sind Formulierungsvorschläge ohne Präjudiz für die Erzielung weitergehenden Patentschutzes. Da speziell die Gegenstände der Unteransprüche im Hinblick auf den Stand der Technik am Prioritätstag eigene und unabhängige Erfindungen bilden können, behält die Anmelderin sich vor, diese oder noch weitere, bisher nur in der Beschreibung und/oder Zeichnung offenbarte Merkmalskombinationen zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Änderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen, Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Prüf- und Arbeitsverfahren betreffen.

Es zeigen
- Figur 1: ein handschriftlich ausfüllbares Formular,
- Figur 2: eine Graphik einer handschriftlichen Zeichenfolge,
- Figur 3: eine Maschineninterpretation zu der Graphik in Figur 2,
- Figur 4: ein Computersystem zur Ausführung der Erfindung,
- Figur 5: eine Darstellung zur Erläuterung einer Verarbeitung einer Graphik gemäß Figur 2 mittels eines Computersystems gemäß Figur 4 und
- Figur 6: ein Computersystem wie in Figur 4 mit Zugriff auf eine Datenbasis.

Wie eingangs erläutert, betrifft die Erfindung ein Verfahren zum gleichzeitigen Darstellen einer Graphik einer handschriftlichen Zeichenfolge und einer Maschineninterpretation der Zeichenfolge mittels eines Anzeigegeräts eines Computersystems.

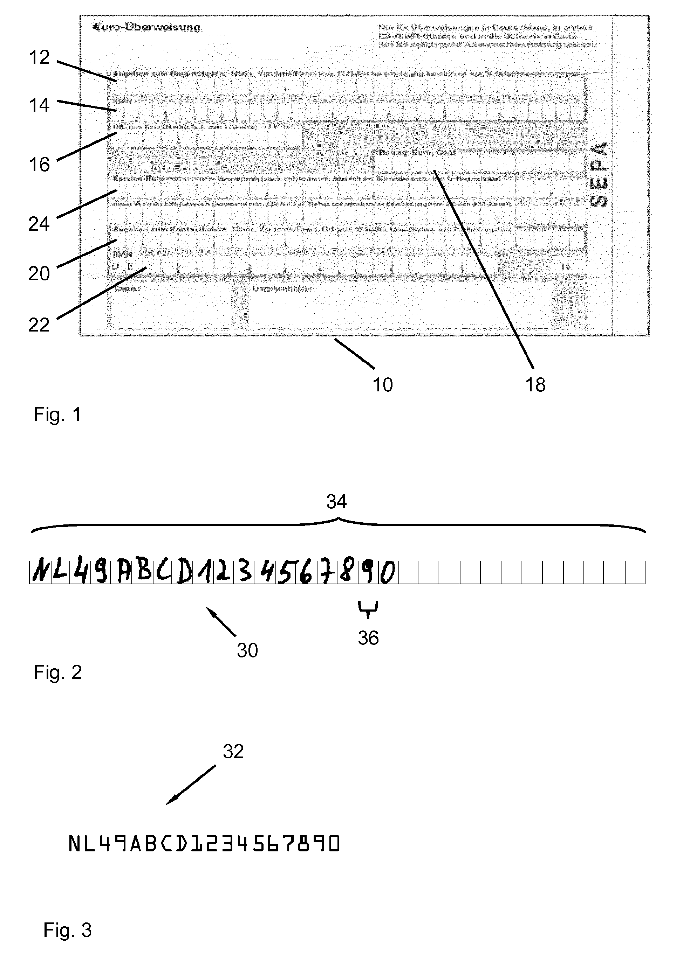

Handschriftliche Zeichenfolgen, wie sie hier im Vordergrund stehen, ergeben sich beim Ausfüllen von Formularen 10 (Figur 1) aller Art. Ein Beispiel für ein derartiges Formular 10 ist ein sogenannter Überweisungsträger, wie er für Banküberweisungen verwendet wird. Die Erfindung wird nachfolgend am Beispiel eines Formulars 10 in Form eines solchen Überweisungsträgers erläutert. Die Erfindung ist aber selbstverständlich nicht auf dieses Anwendungsbeispiel beschränkt, sondern kommt grundsätzlich für alle Arten von Formularen 10 in Betracht, so dass immer dann, wenn im Folgenden ausdrücklich auf einen Überweisungsträger Bezug genommen wird, auch alle anderen Formulare 10 und Formulararten sinngemäß mitzulesen sind.

Die Darstellung in Figur 1 zeigt entsprechend als Beispiel für ein Formular 10 einen Überweisungsträger. Das Formular 10 umfasst in an sich bekannter Art und Weise zumindest ein Textfeld 12-24, hier eine Mehrzahl von Textfeldern 12-24, zum Eintragen von Ziffern und/oder Buchstaben, also numerischen oder alphanumerischen Zeichen. Bei dem in Figur 1 gezeigten Formular 10 ist mit jedem Textfeld 12-24 eine spezielle Bedeutung verknüpft. So werden in ein erstes Textfeld 12 Angaben zum jeweiligen Begünstigten der Zahlung, in ein zweites und drittes Textfeld 14, 16 Angaben zur Bankverbindung des Begünstigten, in ein viertes Textfeld 18 Angaben zu einem zu transferierenden Betrag, in einem fünften und sechsten Textfeld 20, 22 Angaben zum Kontoinhaber und in einem siebten Textfeld 24 Angaben zum Verwendungszweck der Zahlung, wie zum Beispiel eine Kunden- oder Rechnungsnummer, eingetragen.

Alle Textfelder 12-24 können ganz oder teilweise handschriftlich ausgefüllt werden. In der Darstellung in Figur 1 ist erkennbar, dass zum Beispiel das sechste Textfeld 22 teilweise vorausgefüllt ist, indem für die dort einzutragende sogenannte IBAN (International Bank Account Number) bereits ein Länderkennzeichen, hier DE für Deutschland, eingetragen ist.

Handschriftlich ausgefüllte Formulare 10 der in Figur 1 gezeigten Art werden in an sich bekannter Art und Weise einer automatischen Texterkennung unterzogen und das Ergebnis einer solchen automatischen Texterkennung ist eine Umsetzung der handschriftlich eingetragenen Zeichen in ein elektronisch verarbeitbares Format.

Dazu zeigt die Darstellung in Figur 2 exemplarisch eine Graphik 30 einer im Folgenden als handschriftliche Zeichenfolge bezeichneten handschriftlich in das jeweilige Formular 10 eingetragenen Folge von Ziffern und/oder Buchstaben sowie ggf. Sonderzeichen. Eine solche handschriftlich eingetragene Zeichenfolge kann in einem Formular 10 der in Figur 1 gezeigten Art vorkommen, zum Beispiel bei der Spezifikation der Bankverbindung des Begünstigten im dritten Textfeld 16 oder bei der Spezifikation der Angaben zum Kontoinhaber im sechsten Textfeld 22. Eine Graphik 30 einer solchen handschriftlichen Zeichenfolge ergibt sich im Rahmen einer automatischen Auswertung der Eintragungen auf dem Formular 10 durch ein automatisches Texterkennungsverfahren oder eines einer automatischen Texterkennung vorgeschalteten Scanvorgangs des Formulars 10.

Zur Erläuterung der verwendeten Begrifflichkeiten wird darauf hingewiesen, dass die handschriftliche Zeichenfolge die Eintragung auf dem jeweiligen Formular 10, üblicherweise einem Papierformular, und die Graphik der handschriftlichen Zeichenfolge 30 das Ergebnis eines Texterkennungsverfahrens oder eines vorgeschalteten Scanvorgangs ist. Weil nur eine solche Graphik einer handschriftlichen Eingabe 30 - und nicht die zugrunde liegende handschriftliche Eingabe selbst - im Rahmen des im Folgenden beschriebenen Verfahrens elektronisch bearbeitbar ist, wird diese im Folgenden mitunter auch nur kurz als Graphik 30 bezeichnet.

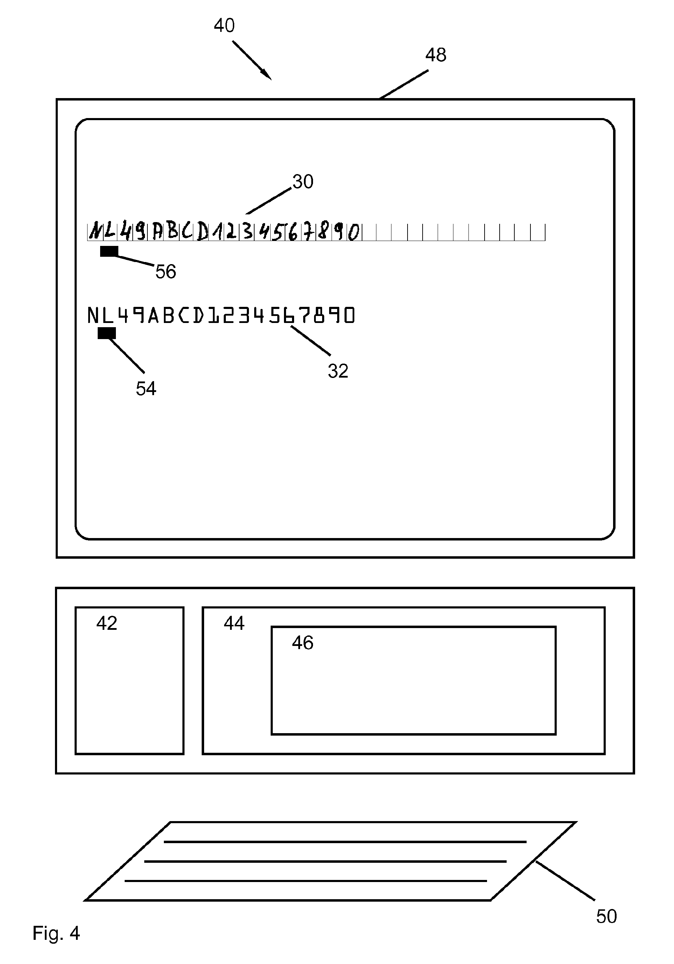

Die Darstellung in Figur 3 zeigt als Ergebnis einer automatischen Texterkennung mit einem vorgeschalteten Scanvorgang eine Maschineninterpretation 32 der Graphik 30 aus Figur 2. Die bei der Darstellung in Figur 3 verwendete sogenannte maschinenlesbare Schrift (OCR-Schrift) ist hier willkürlich und zur Unterscheidung von der handschriftlichen Darstellung in Figur 1 sowie zur Unterscheidung von den Bezugsziffern und den Figurenbezeichnungen gewählt worden. Die Maschineninterpretation 32 ist zunächst nichts anderes als eine in einem Speicher eines Computersystems 40 (Figur 4) als Ergebnis der Texterkennung gespeicherte Zeichenkette (string), die zum Beispiel in einer Form wie in Figur 3 gezeigt an einem Monitor darstellbar ist.

Die Darstellung in Figur 1 und Figur 2 zeigt auch, dass jedes Textfeld 12-24 eine jeweils durch das Formular 10 vorgegebene Breite (Feldbreite) 34 aufweist. Zusätzlich kann jedes Textfeld 12-24 eine Unterteilung in einzelne Zeichenfelder 36 mit einer durch das Formular 10 vorgegebenen Breite (Zeichenbreite) aufweisen. Entsprechend besitzt auch die Graphik 30 eine ebenfalls mit der Bezugsziffer 34 bezeichnete Gesamtbreite.

Soweit die allgemeinen Erläuterungen zum Verständnis der nachfolgenden Beschreibung.

Die Darstellung in Figur 4 zeigt in einer schematisch vereinfachten Form ein Computersystem 40, wie es zur Ausführung der Erfindung in Betracht kommt. Das Computersystem 40 umfasst in an sich bekannter Art und Weise eine Verarbeitungseinheit 42 in Form von oder nach Art eines Mikroprozessors sowie einen Speicher 44. In den Speicher 44 ist ein Computerprogramm 46 geladen, das mittels der Verarbeitungseinheit 42 ausführbar ist. Ausgaben des Computerprogramms 46 werden in an sich bekannter Art und Weise mittels eines hier in Form eines Monitors dargestellten Anzeigegeräts 48 angezeigt. Eingaben zur Bedienung des Computerprogramms 46 erfolgen in ebenfalls an sich bekannter Art mittels eines Eingabegeräts 50 oder mittels mehrerer Eingabegeräte 50, wobei hier beispielhaft ein Eingabegerät 50 in Form einer Tastatur gezeigt ist.

Das im Folgenden beschriebene Verfahren ist zur automatischen Ausführung in Form eines Computerprogramms 46 realisiert. Das Computerprogramm 46 ist zur Ausführung durch ein Computersystem 40, wie in Figur 4 gezeigt, bestimmt. Wenn im Folgenden Verfahrensschritte oder Verfahrensschrittfolgen beschrieben werden, bezieht sich dies auf Aktionen, die aufgrund des Computerprogramms 46 oder unter Kontrolle des Computerprogramms 46 erfolgen, sofern nicht ausdrücklich darauf hingewiesen ist, dass einzelne Aktionen durch einen Benutzer des Computerprogramms 46 veranlasst werden. Zumindest bedeutet jede Verwendung des Begriffs "automatisch", dass die betreffende Aktion aufgrund des Computerprogramms 46 oder unter Kontrolle des Computerprogramms 46 erfolgt.

Die Darstellung in Figur 4 zeigt im Bereich des Anzeigegeräts 48 eine gleichzeitige Darstellung einer Graphik 30 der handschriftlichen Zeichenfolge sowie einer elektronisch durch eine vorangehende Texterkennung gewonnenen Maschineninterpretation 32 der in der Graphik 30 enthaltenen Zeichenfolge. Die Anzeige der Graphik 30 und der Maschineninterpretation 32 erfolgt automatisch und gleichzeitig auf dem Anzeigegerät 48 des Computersystems 40, wobei gleichzeitig in diesem Zusammenhang bedeutet, dass die Graphik 30 und die Maschineninterpretation 32 zusammen am Anzeigegerät 48 sichtbar sind. Die Anzeige der Maschineninterpretation 32 kann dabei über oder - wie dargestellt - unter der Graphik 30 erfolgen. Auf die tatsächliche Positionierung der Graphik 30 und der resultierenden Maschineninterpretation 32 kommt es jedoch - zumindest bei der bis hierher erläuterten Ausführungsform - nicht an, so dass auch andere Nachbarschaftsbeziehungen, etwa eine Darstellung der Maschineninterpretation 32 neben der Graphik 30 oder eine Darstellung der Graphik 30 in Form einer Darstellung des gesamten eingescannten Formulars 10 usw. in Betracht kommen.

Die Darstellung der Maschineninterpretation 32 erfolgt in Form eines editierbaren Eingabefeldes, so dass die Maschineninterpretation 32 mittels des Computersystems 40 editierbar ist. Die Editierbarkeit ist dafür vorgesehen, dass durch einen Benutzer des Computersystems 40 Fehler bei der Texterkennung und der auf dieser Basis automatisch erzeugten Maschineninterpretation 32 korrigierbar sind.

Beim Editieren der Maschineninterpretation 32 erscheint am Anzeigegerät 48 des Computersystems 40 - so wie dies bei Eingaben an einem Computersystem 40 üblich ist - an einer jeweiligen Eingabeposition automatisch ein Cursor, der zur Unterscheidung im Folgenden als Textcursor 54 bezeichnet wird. Die Eingabeposition ist dabei die Position innerhalb der Maschineninterpretation 32, an der sich der Textcursor 54 befindet. Die jeweilige Eingabeposition kann also durch eine natürliche Zahl (Eingabeposition = [1,2...n]) angegeben werden. Der Ort des Textcursors 54 und die Eingabeposition gehören folglich unmittelbar zusammen und die Anzeige des Textcursors 54 unter einem bestimmten Zeichen der Maschineninterpretation 32 erfolgt automatisch auf Basis der jeweiligen Eingabeposition. Wenn im Folgenden auf eine Position des Textcursors 54 Bezug genommen wird, meint dies immer auch die Eingabeposition innerhalb der Maschineninterpretation 32.

Der hier vorgeschlagene Ansatz zum automatischen gleichzeitigen Darstellen einer Graphik 30 einer handschriftlichen Zeichenfolge und einer Maschineninterpretation 32 der Graphik 30 mittels des Anzeigegeräts 48 des Computersystems 40 zeichnet sich dadurch aus, dass in der Graphik 30 oder relativ zu der Graphik 30 automatisch ein weiterer Cursor angezeigt wird, der zur Unterscheidung von dem beim Editieren der Maschineninterpretation 32 angezeigten Textcursor 54 als Graphikcursor 56 bezeichnet wird. Die Besonderheit besteht dabei darin, dass der Graphikcursor 56 in der Graphik 30 oder relativ zu der Graphik 30 automatisch an einer mit der jeweiligen Eingabeposition korrespondierenden Stelle angezeigt wird. Wenn also - wie exemplarisch in Figur 4 gezeigt - der Textcursor 54 das Zeichen "L" der Maschineninterpretation 32 bezeichnet, wird der Graphikcursor 56 in der Graphik 30 oder relativ zu der Graphik 30 automatisch an einer korrespondierenden Stelle angezeigt, also unterhalb desjenigen Abschnitts der Graphik 30, in dem sich die Grundlage für das mit dem Textcursor 54 bezeichnete "L" der Maschineninterpretation befindet.

In der Darstellung sind der Textcursor 54 und der Graphikcursor 56 jeweils als Liniencursor unter der Maschineninterpretation 32 bzw. der Graphik 30 gezeigt.

Die Bezeichnung der beiden Cursor 54, 56 als Textcursor 54 bzw. Graphikcursor 56 dient nur der sprachlichen Unterscheidung und ist nicht einschränkend auszulegen.

Zur Darstellung des Textcursors 54 und des Graphikcursors 56 kommt jede geeignete Form der optischen Hervorhebung der jeweiligen Position in Betracht, also - wie dargestellt - eine horizontale Linie oder ein Block unterhalb der Graphik 30 und/oder der Maschineninterpretationen 32, eine horizontale Linie oder ein Block unterhalb und oberhalb der Graphik 30 und/oder der Maschineninterpretation 32, eine inverse Darstellung des Zeichens innerhalb der Maschineninterpretation 32 an der jeweiligen Eingabeposition und eine inverse Darstellung des entsprechenden Abschnitts der Graphik 30 und so weiter.

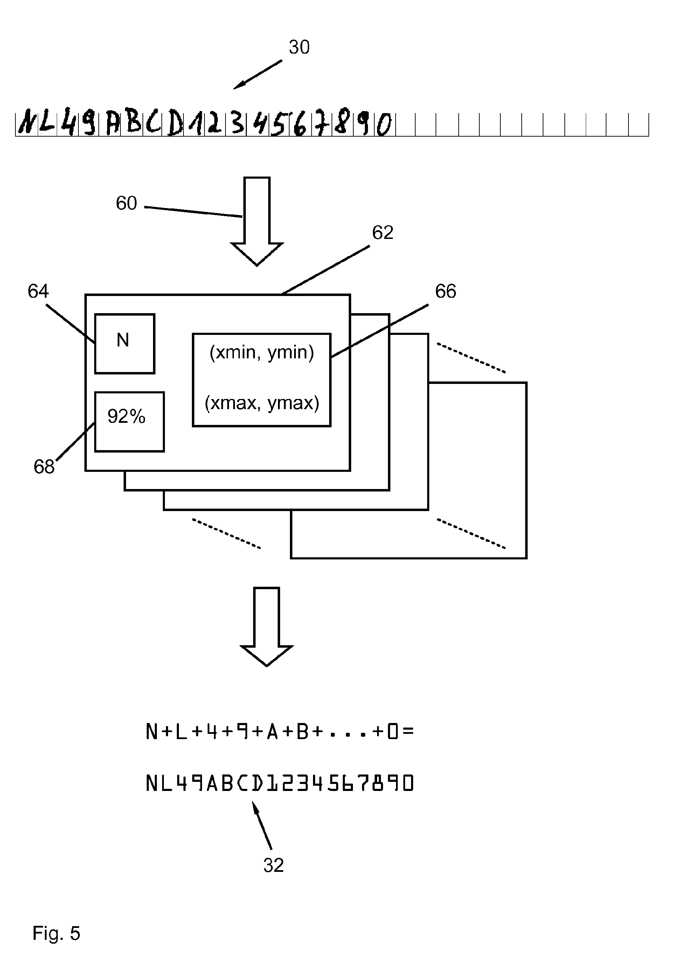

Im Folgenden wird anhand der Darstellung in Figur 5 erläutert, wie in der Graphik 30 automatisch an einer mit der Eingabeposition in der Maschineninterpretation 32 korrespondierenden Stelle der Graphikcursor 56 angezeigt wird. Dazu ist im oberen Bereich der Darstellung in Figur 5 zunächst wieder die Graphik 30 der handschriftlichen Zeichenfolge gezeigt. Diese bildet stets die Ausgangsbasis. Die Graphik 30 ist zunächst das Ergebnis eines Scanvorgangs und im Zusammenhang mit dem Scanvorgang oder anschließend an den Scanvorgang wird die Graphik 30 mittels einer Texterkennung 60 analysiert. Das Scannen von Formularen 10 sowie Algorithmen zur Texterkennung 60 in Formularen 10 sind an sich bekannt. Die Texterkennung 60 ist auch nicht Gegenstand des hier vorgestellten Ansatzes. Die Texterkennung 60 ist auch nicht notwendig Bestandteil des Computerprogramms 46 und kann dementsprechend als weiteres, aber unabhängiges Computerprogramm in den Speicher 44 des Computersystems 40 geladen sein. Die Texterkennung 60 kann auch auf einem anderen Computersystem ausgeführt werden, so dass das Computersystem 40, mit dem das hier beschriebene Verfahren ausgeführt wird, Resultate der Texterkennung 60 in Form von in den Speicher 44 geladenen oder ladbaren Daten erhält.

Deshalb ist die Texterkennung 60 in der Darstellung in Figur 5 nur schematisch vereinfacht in Form des nach unten weisenden Blockpfeils gezeigt. Ergebnis der Texterkennung 60 ist zum Beispiel eine Mehrzahl von in den Speicher 44 geladenen Datensätzen 62. Jeder Datensatz 62 repräsentiert ein in der Graphik 30 mittels der Texterkennung 60 erkanntes Zeichen 64. Insofern umfasst jeder Datensatz 62 zumindest ein erstes Datum mit dem erkannten Zeichen 64 - in Figur 5 als "N" als dem ersten Zeichen in der Graphik 30 gezeigt. Des Weiteren umfasst jeder Datensatz 62 ein zweites Datum mit Informationen zu der Position (Positionsinformation 66) des jeweiligen Zeichens 64 innerhalb der Graphik 30. Dies ist bei der Darstellung in Figur 5 symbolisch mit "xmin, ymin" sowie "xmax, ymax" gezeigt, wobei xmin für die Anfangskoordinate des jeweiligen Zeichens 64 in x-Richtung (horizontaler Richtung) und ymin für die Anfangskoordinate des jeweiligen Zeichens 64 in y-Richtung (vertikaler Richtung) sowie xmax für die Endkoordinate des jeweiligen Zeichens 64 in x-Richtung und ymax für die Endkoordinate des jeweiligen Zeichens 64 in y-Richtung stehen.

Mit der Positionsinformation 66 ist eine Darstellung des Graphikcursors 56 möglich. Zum Beispiel kann ab der durch xmin/ymin spezifizierten Position als Graphikcursor 56 automatisch eine horizontale Linie vorgegebener oder vorgebbarer Länge dargestellt werden. Genauso kann ein Graphikcursor 56 in Form zweier rechtwinklig bei xmin/ymin aufeinanderstoßender Schenkel mit einer vorgegebenen oder vorgebbaren Länge der Schenkel dargestellt werden. Eine noch genauere Kennzeichnung des jeweiligen Zeichens 64 durch den Graphikcursor 56 ergibt sich, wenn der Graphikcursor 56 automatisch zwischen den Positionen xmin/ymin und xmax/ymin dargestellt wird, zum Beispiel in Form einer Linie zwischen xmin/ymin und xmax/ymin oder eines Rechtecks mit einer vorgegebenen oder vorgebbaren Höhe, dessen obere Kante entlang einer Linie zwischen xmin/ymin und xmax/ymin verläuft. -- Bei der Erläuterung der Position des Graphikcursors 56 ist davon ausgegangen worden, dass sich der Ursprung eines Koordinatensystems, in dem die Graphik 30 ausgewertet wird, an dessen unterer linker Ecke befindet. Für andere Verhältnisse, zum Beispiel einen Ursprung an der oberen linken Ecke der Graphik 30, gilt das oben Gesagte entsprechend. Zum automatischen Anzeigen des Graphikcursor 56 in einem Koordinatensystem des Anzeigegeräts 48 erfolgt eine an sich bekannte Umrechnung der Koordinaten relativ zum Koordinatensystem der Graphik 30 in das jeweilige Koordinatensystem des Anzeigegeräts 48.

Auf die genaue Art der Spezifikation der Position des jeweiligen Zeichens 64 innerhalb der Graphik 30 kommt es im Übrigen nicht an. Für den hier vorgestellten Ansatz würde es zum Beispiel ausreichen, wenn jeder Datensatz 62 als Positionsinformation 66 nur Informationen zu den Anfangskoordinaten jedes Zeichens 64 innerhalb der Graphik 30 umfassen würde. Dann kann - so wie oben für die Koordinate xmin erläutert - dort automatisch eine Linie oder ein Winkel als Graphikcursor 56 dargestellt werden. Des Weiteren ist eine Angabe einer Anfangs- und / oder Endkoordinate des jeweiligen Zeichens 64 in vertikaler Richtung (y-Richtung) nicht in jedem Fall notwendig, denn bei bestimmten Formularen 10 kann zum Beispiel davon ausgegangen werden, dass alle Zeichen 64 auf einer in etwa gleichen Höhe beginnen, die zum Beispiel durch eine in dem Formular 10 eingetragene horizontale Linie und einen gewissen Toleranzbereich unterhalb einer solchen horizontalen Linie vorgegeben sein kann. Dann ergibt sich daraus eine für alle Zeichen 64 gemeinsame Anfangskoordinate in vertikaler Richtung, die dementsprechend nicht für jedes Zeichen 64 individuell erfasst werden muss. Genauso kann es sich in Bezug auf eine Endkoordinate in vertikaler Richtung verhalten. Hier kommt ein oberes Ende einer entsprechenden Markierung des Textfeldes in dem Formular 10 und ein vorgegebener oder vorgebbarer Toleranzbereich für eine allen Zeichen 64 gemeinsame Endkoordinate in vertikaler Richtung in Betracht. Schließlich ist auch nicht erforderlich, dass die Positionsinformation 66 in absoluten Koordinaten bezogen auf einen Ursprung der Graphik 30 angegeben wird. Genauso können die Koordinaten als relative Koordinaten angegeben werden und sich jeweils auf die Positionsinformation 66 eines in der Folge der Datensätze 62 vorangehenden Datensatzes 62 beziehen. Alle beschriebenen Möglichkeiten zur Spezifikation einer Position eines Zeichens 64 innerhalb der Graphik 30 sollen für die Auslegung der hier vorgelegten Beschreibung als von dem Begriff "Positionsinformation" 66 umfasst gelten.

Oben wurde erläutert, wie mit einer solchen Positionsinformation 66 eine automatische Darstellung eines Graphikcursors 56 möglich ist. Die Darstellung des Graphikcursors 56 an der mit der Eingabeposition in der Maschineninterpretation 32 korrespondierenden Stelle erfolgt anhand einer Ordnungsnummer der Datensätze 62. Dazu sei zunächst darauf hingewiesen, dass aus den Datensätzen 62 und den davon umfassten Zeichen 64 die Maschineninterpretation 32 resultiert. Dies ist in der Darstellung in Figur 5 durch den von den Datensätzen 62 ausgehenden und nach unten in Richtung auf die Maschineninterpretation 32 weisenden Blockpfeil veranschaulicht. Danach ergibt sich die Maschineninterpretation 32 zum Beispiel, indem die einzelnen Zeichen 64 zu einem sogenannten String zusammengefügt werden. Dies ist in der Darstellung in Figur 5 symbolisch durch die "Addition" der einzelnen Zeichen 64 gezeigt (N+L+4+9+R+A+...+3 = NL49RABO00105573973). Eine solche Addition von Zeichen 64 ist in vielen Programmiersprachen möglich und führt dazu, dass das letzte jeweils addierte Zeichen an eine bestehende Zeichenkette (String) angefügt wird. Im Ergebnis entsteht eine die Maschineninterpretation 32 repräsentierende Zeichenkette. Innerhalb dieser Zeichenkette hat jedes Zeichen 64 eine eindeutige Position. So hat zum Beispiel das erste Zeichen "N" die Position 1 (in einzelnen Programmiersprachen auch die Position 0) und das zweite Zeichen "L" entsprechend die Position 2 und so weiter.

Mit jedem Zeichen 64 in der Maschineninterpretation 32 ist damit also ein die Position des Zeichens 64 in der Zeichenkette angebender Zahlenwert verknüpft. Wenn beim Editieren der Maschineninterpretation 32 der Textcursor 54 bewegt wird, wird ein die Eingabeposition angebender Zahlenwert inkrementiert oder dekrementiert. Der Zahlenwert der jeweiligen Eingabeposition und der Zahlenwert einer Position des mit dem Textcursor 54 markierten Zeichens 64 entsprechen einander dabei jeweils.

Zur Darstellung des Graphikcursors 56 erfolgt mit diesem Zahlenwert ein Zugriff auf einen der Datensätze 62. Wenn die Datensätze 62 in Form eines eindimensionalen Feldes (array) organisiert sind, ist innerhalb eines solchen Feldes der Zugriff auf einen einzelnen Datensatz 62 durch Verwendung einer Ordnungsnummer zur Bezeichnung genau eines Datensatzes 62 innerhalb des Feldes möglich. Ein Zugriff wie "Datensatz[1].Zeichen" würde also zum Beispiel das in einem ersten Datensatz eines Feldes mit mehreren Datensätzen gespeicherte Zeichen 64 als Ergebnis liefern, hier also zum Beispiel das Zeichen "N". Entsprechend liefert ein Zugriff wie "Datensatz[2]. Zeichen" das zweite Zeichen 64 der Graphik 30 und ein Zugriff wie "Datensatz[n].Zeichen" das n-te Zeichen 64 der Graphik 30. Genauso kann auch auf die Positionsinformation 66 der einzelnen Datensätze 62 zugegriffen werden. Damit ist mit einer als Ordnungsnummer zum Zugriff auf einen der Datensätze 62 verwendeten Position des Textcursors 54 innerhalb der Maschineninterpretation 32 und dem korrespondierenden Zahlenwert jederzeit ein automatischer Zugriff auf die Datensätze 62 und die Position des korrespondierenden Zeichens 64 innerhalb der Graphik 30 möglich. Damit kann in der Graphik 30 jeder einem jeweiligen Zeichen 64 der Maschineninterpretation 32 zugrunde liegende Abschnitt automatisch mittels eines Graphikcursors 56 markiert werden.

Die gleichen Verhältnisse gelten entsprechend auch, wenn die Datensätze 62 nicht in einer statischen Datenstruktur in Form eines eindimensionalen Feldes, sondern in einer dynamischen Datenstruktur in Form eines Stapels, einer einfach oder doppelt verketteten Liste oder dergleichen gespeichert sind. Dann tritt zum Beispiel eine zum Zugriff auf die Datensätze 62 verwaltete Laufvariable oder dergleichen an die Stelle der oben erwähnten Ordnungsnummer.

Das mittels des Textcursors 54 markierte Zeichen 64 der Maschineninterpretation 32 kann auf diese Weise jederzeit leicht durch einen Benutzer des Computersystems 40 mit dem mit dem Graphikcursor 56 markierten und dem jeweiligen Zeichen 64 zugrunde liegenden Abschnitt der Graphik 30 verglichen werden. Damit ist es möglich, Fehler bei der Generierung der Maschineninterpretation 32 schnell und effizient zu korrigieren. Aufgrund der automatischen synchronen Markierung des jeweiligen Zeichens 64 in der Maschineninterpretation 32 mittels des Textcursors 54 einerseits und des dem Zeichen 64 der Maschineninterpretation 32 zugrunde liegenden Abschnitts der Graphik 30 mittels des Graphikcursors 56 andererseits ist es leicht möglich zu erkennen, ob der betreffende Abschnitt der Graphik 30 durch die Texterkennung 60 korrekt interpretiert wurde. Im Falle eines Fehlers ist es ebenso leicht möglich, an der jeweiligen Position der Maschineninterpretation 32 aufgrund des mittels des Graphikcursors 56 hervorgehobenen Abschnitts der Graphik 30 eine Korrektur vorzunehmen. Dies ist besonders dann hilfreich, wenn die Graphik 30 eine Mehrzahl gleicher oder gleichartiger aufeinanderfolgender Zeichen, zum Beispiel eine Mehrzahl von Nullen, umfasst. Dann kommt es bisher bei der Überprüfung einer Maschineninterpretation 32 anhand einer Graphik 30 durchaus zu Fehlern, die daraus resultieren, dass von zum Beispiel vier aufeinanderfolgenden Nullen nur drei übernommen werden und/oder dass eine Korrektur eines bei der Generierung der Maschineninterpretation 32 nicht korrekt erkannten Zeichens 64 an einer falschen Stelle erfolgt. Dies kann mit dem hier vorgeschlagenen Ansatz sinnvoll verhindert werden, denn der in der Graphik 30 zu der jeweiligen Eingabeposition gehörige Abschnitt wird automatisch jederzeit mit dem Graphikcursor 56 markiert. Der Benutzer muss sich also im Grunde überhaupt nicht um die jeweilige Eingabeposition in der Maschineninterpretation 32 kümmern und es reicht aus, wenn der Benutzer jeweils das mit dem Textcursor 54 markierte Zeichen 64 mit dem automatisch mit dem Graphikcursor 56 markierten Abschnitt der Graphik 30 vergleicht. Wenn auf diese Weise alle Zeichen 64 der Maschineninterpretation 32 mit den zugrunde liegenden Abschnitten der Graphik 30 verglichen wurden und keine Fehler festgestellt wurden oder eventuelle Fehler bereinigt sind, ist die Generierung der Maschineninterpretation 32 in ausreichender Art und Weise geprüft.

Normalerweise ist eine Überprüfung aller Zeichen aber nicht notwendig und normalerweise ist eine Überprüfung einer Maschineninterpretation 32 einer zugrunde liegenden Graphik 30 nur dann überhaupt erforderlich, wenn bei der Generierung der Maschineninterpretation 32 nicht alle Zeichen 64 mit einer ausreichenden Sicherheit erkannt wurden. In der Darstellung in Figur 5 ist dazu gezeigt, dass jeder Datensatz 62 ein Datum für eine Plausibilität 68 des erkannten Zeichens 64 umfasst. In der Darstellung in Figur 5 ist also das Zeichen 64 "N" mit einer Plausibilität 68 von 92 % erkannt worden. Eine Plausibilität 68 in dieser Größenordnung kann als ausreichende Plausibilität 68 ausgewertet werden, so dass das jeweilige Zeichen 64 als ausreichend sicher erkannt gilt. Zeichen 64, die mit einer geringeren Plausibilität 68 erkannt werden, gelten demgegenüber nicht als ausreichend sicher erkannt und erfordern eine Überprüfung und gegebenenfalls eine Korrektur durch einen menschlichen Bearbeiter. Allgemein erfordert jedes Zeichen 64, das mit einer Plausibilität 68 unterhalb eines vorgegebenen oder vorgebbaren Schwellwerts - zum Beispiel 80 %-erkannt wurde, eine solche Prüfung.

Eine solche Prüfung und erforderlichenfalls eine Korrektur kann mit dem Computersystem 40 aus Figur 4 erfolgen. Nur solche gescannten Formulare 10, bei denen die Texterkennung 60 bei zumindest einem Zeichen 64 zu einer Plausibilität 68 unterhalb des vorgegebenen oder vorgebbaren Schwellwerts geführt hat, werden automatisch am Anzeigegerät 48 dargestellt. Der Textcursor 54 wird dabei zum Beispiel automatisch direkt auf die Position eines ersten Zeichens 64 bewegt, das nicht mit ausreichender Sicherheit erkannt wurde. Der Benutzer muss also diese Positionierung des Textcursors 54 gar nicht selbst vornehmen. Neben der damit erreichten Zeitersparnis befindet sich der Textcursor 54 außerdem unmittelbar an der Stelle des zu prüfenden Zeichens 64, so dass Fehler vermieden werden, wie sie sich daraus ergeben können, dass eine Korrektur irrtümlich an einer falschen Stelle durchgeführt wird. Sobald das betreffende Zeichen 64 überprüft und gegebenenfalls korrigiert wurde, kann der Benutzer weitere Zeichen prüfen. Bei einer besonderen Ausführungsform kann der Benutzer mit dem Textcursor 54 automatisch nur solche Eingabepositionen innerhalb der Maschineninterpretation 32 erreichen, an denen sich Zeichen 64 befinden, die nicht mit ausreichender Sicherheit erkannt wurden. Dann kann der Benutzer mit jeder Bewegung des Textcursors 54 genau ein zu überprüfendes Zeichen 64 erreichen. Zusätzlich oder alternativ kann in der Maschineninterpretation 32 jedes nicht mit ausreichender Sicherheit erkannte Zeichen 64 automatisch optisch hervorgehoben werden, so dass das jeweilige Zeichen 64 am Anzeigegerät 48 zum Beispiel invertiert, blinkend und/oder in einer anderen Farbe erscheint. Auf diese Weise ist das oder jedes zu überprüfende Zeichen 64 für den Benutzer leicht erkennbar und ein zu überprüfendes Zeichen 64 kann durch Bewegung des Textcursors 54 leicht angesprungen werden. Der Graphikcursor 56 wird dabei automatisch stets synchron positioniert oder synchron mitbewegt, so dass jederzeit der Bezug zu dem entsprechenden Abschnitt der Graphik 30 für den Benutzer klar ist. Damit ist erreicht, dass die Überprüfung und gegebenenfalls Korrektur der Maschineninterpretation 32 schnell und effizient vonstatten gehen kann. Wenn alle nicht mit ausreichender Sicherheit erkannten Zeichen 64 eines zugrunde liegenden Formulars 10 überprüft und gegebenenfalls korrigiert sind, kann die Prüfung mit der Maschineninterpretation 32 des nächsten Formulars 10 fortgesetzt werden.

Die Darstellung in Figur 4 mit der gleichzeitigen Anzeige der Maschineninterpretation 32 und der zugrunde liegenden Graphik 30 zeigt bereits eine besondere Ausführungsform des hier vorgeschlagenen Verfahrens der automatischen synchronen Markierung eines Zeichens 64 in der Maschineninterpretation 32 und eines zugrunde liegenden Abschnitts der Graphik 30. Bei der Darstellung in Figur 4 ist nämlich gezeigt, dass die Graphik 30 automatisch so skaliert wurde, dass diese in ihrer Breite mit der Breite der Darstellung der Maschineninterpretation 32 übereinstimmt oder zumindest im Wesentlichen übereinstimmt.

Eine solche Skalierung lässt sich erreichen, indem zunächst automatisch eine Breite der Darstellung der Maschineninterpretation 32 am Anzeigegerät 48 ermittelt wird. Die Maschineninterpretation 32 wird vorteilhaft automatisch in einer Schriftart mit einer für alle Zeichen gleichen Breite, also einer nichtproportionalen Schriftart (Monospace Schriftart), dargestellt. Dann kann automatisch die Anzahl der von der Maschineninterpretation 32 umfassten Zeichen 64 ermittelt und dieser Wert mit einer festen Zeichenbreite multipliziert werden. Dies ist die Breite der Darstellung der Maschineninterpretation 32 am Anzeigegerät 48. Die Breite der Darstellung der unskalierten Graphik 30 ergibt sich aus einer größten Positionsinformation 66 und einer kleinsten Positionsinformation 66 jeweils in horizontaler Richtung (x-Richtung), also zum Beispiel aus der Differenz des größten xmax-Werts und des kleinsten xmin-Werts. Die so ermittelte Breite der unskalierten Graphik 30 kann automatisch zu der Breite der Maschineninterpretation 32 in Relation gesetzt werden und das resultierende Verhältnis zur automatischen Skalierung der Graphik 30, zumindest zur Skalierung der Graphik 30 in horizontaler Richtung (x-Richtung), verwendet werden. Im Ergebnis wird die Graphik 30 automatisch mit einer der Breite der Darstellung der Maschineninterpretation 32 entsprechenden Breite dargestellt, so dass der jedem Zeichen 64 der Maschineninterpretation 32 zugrunde liegende Abschnitt der Graphik 30 über oder unter dem betreffenden Zeichen 64 oder zumindest näherungsweise über oder unter dem betreffenden Zeichen 64 dargestellt wird. Diese Darstellung unterstützt neben der synchronen Markierung mittels des Text- und Graphikcursors 54, 56 die Zuordnung von Maschineninterpretation 32 und zugrunde liegender Graphik 30 nochmals deutlich.

Ansonsten kann die automatische Skalierung auch erreicht werden, indem eine Gesamtbreite 34 (Figur 2) der Graphik 30 und eine Breite eines Eingabefeldes, in dem die Maschineninterpretation 32 zur Überprüfung und zur Korrektur dargestellt wird, in Relation gesetzt werden und auf dieser Basis eine automatische Skalierung der Graphik 30 erfolgt. Die Breite des Eingabefeldes resultiert dabei aus der gemäß dem jeweiligen Textfeld 12-24 des Formulars 10 möglichen Zeichenanzahl und der Zeichenbreite bei der Darstellung der Maschineninterpretation 32.

Bei einer weiteren Ausführungsform des Verfahrens ist vorteilhaft vorgesehen, dass automatisch auch die einzelnen jeweils ein Zeichen umfassenden Abschnitte der Graphik 30 skaliert werden. Dann sind auch Situationen handhabbar, bei denen bei der der Graphik 30 zugrunde liegenden handschriftlichen Eingabe einzelne Zeichen besonders bereit oder besonders schmal geschrieben wurden. Als Ergebnis der Skalierung wird jeder jeweils ein Zeichen umfassende Abschnitt der Graphik 30 so skaliert, dass dieser direkt über oder unter dem betreffenden Zeichen 64 der aufgrund der Graphik 30 resultierenden Maschineninterpretation 32 dargestellt wird. Dazu wird jeder aufgrund der Texterkennung 60 resultierende Datensatz 62 einzeln betrachtet. Mit der davon jeweils umfassten Positionsinformation 66, speziell wenn die Positionsinformation 66 eine untere linke und eine obere rechte Ecke (xmin/ymin; xmax/ymax) oder eine obere linke und eine untere rechte Ecke des betreffenden Abschnitts innerhalb der Graphik 30 angibt, ergibt sich eine Höhe und eine Breite des jeweiligen Abschnitts der Graphik 30. Mit einer bekannten Breite eines Zeichens 64 innerhalb der Darstellung der Maschineninterpretation 32 lässt sich der jeweilige Abschnitt der Graphik 30 automatisch so skalieren, dass der Abschnitt der Graphik 30 mit exakt derselben Breite wie das resultierende Zeichen 64 in der Maschineninterpretation dargestellt wird. Dann ist eine automatische Darstellung einer segmentweise skalierten Graphik 30 direkt unter oder über der Maschineninterpretation 32 möglich, so dass die Zusammengehörigkeit eines Zeichens 64 in der Maschineninterpretation 32 nicht nur durch die automatische synchrone Darstellung von Text- und Graphikcursor 54, 56, sondern auch durch die fluchtende Darstellung von Graphik 30 und Maschineninterpretation 32 deutlich wird.

Auch diese Art der segmentweisen Skalierung kann automatisch bezogen auf die gesamte Graphik 30 und deren Gesamtbreite 34 (Figur 2) erfolgen.

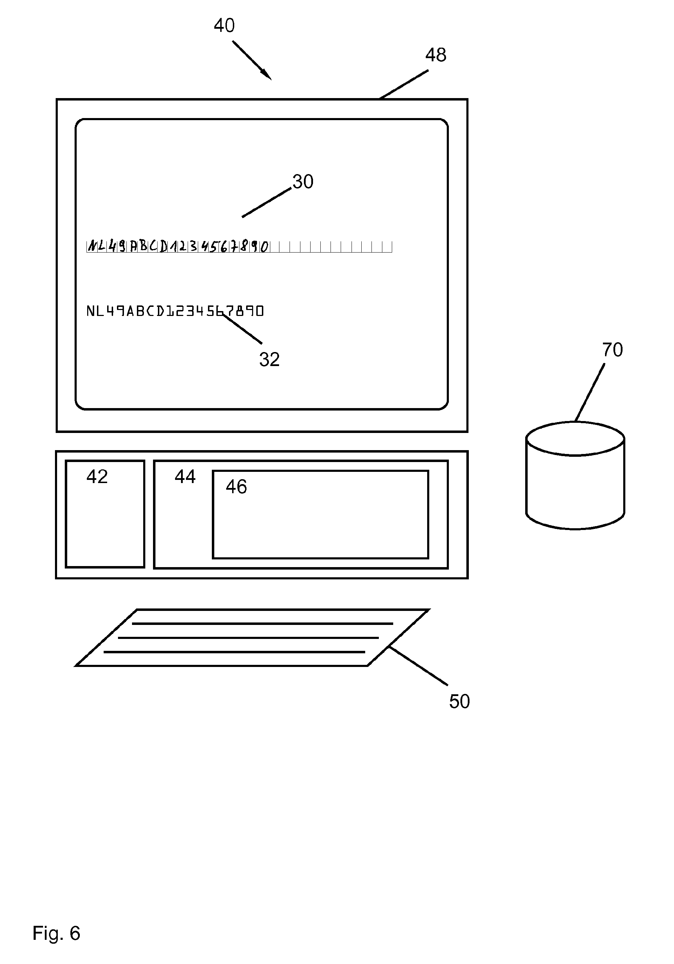

Die Darstellung in Figur 6 zeigt im Wesentlichen eine Wiederholung der Darstellung des Computersystems 40 aus Figur 4. Zusätzlich ist eine Datenbasis 70 gezeigt, auf die das Computersystem 40 in an sich bekannter Art und Weise mittelbar oder unmittelbar Zugriff hat. Die Datenbasis 70 umfasst Informationen zu möglichen Formaten der auf dem jeweiligen Formular 10 erfolgenden handschriftlichen Eingabe. Wenn das Formular 10 zum Beispiel ein Textfeld 12-24 zum Eintragen eines Kalenderdatums umfasst, ergibt sich aus der Position des Textfeldes 12-24 innerhalb des Formulars 10 ein erwartetes Format für eine Maschineninterpretation 32, welcher wiederum eine an der jeweiligen Position des Textfeldes 12-24 gescannte Graphik 30 zugrunde liegt. Bei einem Textfeld 12-24 zum Eintragen eines Kalenderdatums sieht das zugehörige Format in an sich bekannter Art und Weise zwei Stellen zur Angabe eines Tages, zwei Stellen zur Angabe eines Monats und zwei oder vier Stellen zur Angabe einer Jahreszahl vor ("TT.MM.JJ" oder "TT.MM.JJJJ"). Das jeweils erwartete Format kann sich zusätzlich oder alternativ auch aus den jeweils eingetragenen Daten ergeben. Wenn es sich bei der handschriftlichen Eingabe nämlich zum Beispiel um eine Spezifikation einer internationalen Bankkontonummer (IBAN) handelt, so ergibt sich daraus, dass die ersten beiden Zeichen einer solchen Eingabe ein Länderkennzeichen spezifizieren, zum Beispiel "DE" für Deutschland, "NL" für die Niederlande und so weiter. Wenn also ein derartiges Länderkennzeichen an einer Position eines Formulars 10 erkannt wurde, die zur Spezifikation einer IBAN bestimmt ist, ergibt sich aus der Position und aus dem jeweiligen Länderkennzeichen ein spezielles Format der IBAN und in der Datenbasis 70 sind für alle möglichen Länderkennzeichen oder zumindest für einzelne besonders gebräuchliche Länderkennzeichen die jeweils zugehörigen Formate hinterlegt. Das IBAN-Format für Deutschland sieht zum Beispiel zunächst zwei Stellen als Länderkennzeichen, dann zwei Stellen als Prüfsumme, sodann acht Stellen zur Spezifikation einer Bankleitzahl und schließlich zehn Stellen zur Spezifikation einer Kontonummer vor. Das IBAN-Format für die Niederlande sieht demgegenüber zunächst zwei Stellen als Länderkennzeichen, dann zwei Stellen als Prüfsumme, sodann vier Stellen zur Spezifikation einer Bankleitzahl und schließlich zehn Stellen zur Spezifikation einer Kontonummer vor.

Bei der Überprüfung der Maschineninterpretation 32 der jeweiligen Graphik 30 kann dann automatisch eine abschnittsweise Hervorhebung oder sonstige optische Kenntlichmachung der entsprechend dem jeweiligen Format zusammengehörigen Zeichen 64 innerhalb der Maschineninterpretation 32 und/oder in gleicher Weise eine abschnittsweise Hervorhebung oder sonstige optische Kenntlichmachung der jeweils zugehörigen Abschnitte der Graphik 30 erfolgen. Bei der Prüfung einer ein Kalenderdatum darstellenden Maschineninterpretation 32 werden also demnach zum Beispiel, solange sich der Textcursor 54 an einer der beiden zur Spezifikation des jeweiligen Monats vorgesehenen Eingabepositionen befindet, die zum Monat gehörigen Zeichen 64 der Maschineninterpretation optisch hervorgehoben, zum Beispiel mit einer anderen Hintergrundfarbe dargestellt. Alternativ oder zusätzlich werden die zugrunde liegenden Abschnitte der Graphik 30 optisch hervorgehoben. Wenn die optische Hervorhebung automatisch sowohl in Bezug auf die Maschineninterpretation 32 wie auch in Bezug auf die Graphik 30 erfolgt, bietet es sich an, eine gleichartige optische Hervorhebung zu verwenden, zum Beispiel eine gleiche oder gleichartige Hintergrundfarbe. Dieses Beispiel kann auch für die Eingabe einer IBAN fortgeführt werden. Dort ist das jeweils erwartete Format kein fest vorgegebenes Format, sondern von einem Teil der Eingabe abhängig, so dass zum Beispiel bei einer Korrektur eines das Länderkennzeichen darstellenden Zeichens 64 der Maschineninterpretation 32 sich das erwartete Format entsprechend ändert. Jedenfalls werden entsprechend des jeweils erwarteten Formats automatisch zusammengehörige Zeichen 64 innerhalb der Maschineninterpretation 32 und/oder zugrunde liegende Abschnitte der Graphik 30 optisch hervorgehoben. Die optische Hervorhebung kann auch darin bestehen, dass automatisch innerhalb des jeweiligen Formats Segmentgrenzen 72 dargestellt werden, zum Beispiel in Form vertikaler Linien. In einer IBAN gibt es demnach ein Segment, in dem die Länderkennzeichnung spezifiziert wird, ein Segment mit der Prüfsumme oder ein Segment mit der Länderkennzeichnung und der Prüfsumme, ein Segment zur Spezifikation der Bankleitzahl und ein Segment zur Spezifikation der Kontonummer. Eine automatische Darstellung solcher Segmentgrenzen 72 kann unabhängig von der jeweiligen Eingabeposition, also unabhängig von der jeweiligen Position des Textcursors 54 erfolgen, so dass die Segmentgrenzen 72 in der Maschineninterpretation 32 und/oder der Graphik 30 automatisch immer angezeigt werden. Alternativ kann eine Anzeige solcher Segmentgrenzen 72 automatisch auch nur für dasjenige Segment erfolgen, in dem sich der Textcursor 54 jeweils befindet.

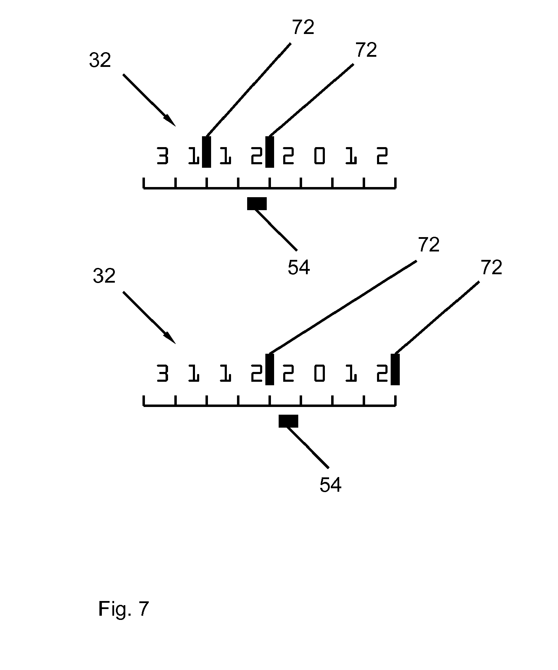

Dies ist in der Darstellung in Figur 7 für eine Situation mit einer ein Kalenderdatum repräsentierenden Maschineninterpretation 32 gezeigt. Das zugehörige Format wird durch Anzeige von jeweils zwei Segmentgrenzen 72 angezeigt. Die beiden Darstellungen in Figur 7 zeigen Momentaufnahmen beim Editieren der Maschineninterpretation 32. In der oberen Darstellung befindet sich der Textcursor 54 im Bereich der zur Spezifikation des Monats vorgesehenen Zeichen und entsprechend werden die Segmentgrenzen 72 rechts und links der beiden zur Spezifikation des Monats vorgesehenen Zeichen dargestellt. Bei der unteren Darstellung ist der Textcursor 54 nach rechts bewegt und befindet sich im Bereich der zur Spezifikation der Jahreszahl vorgesehenen Zeichen. Demgemäß werden die Segmentgrenzen 72 rechts und links der vier zur Spezifikation der Jahreszahl vorgesehenen Zeichen dargestellt. Für eine andere graphische Hervorhebung, zum Beispiel einen farbigen Hintergrund oder dergleichen, gilt dies sinngemäß entsprechend. Nicht gezeigt ist, dass eine solche oder ähnliche graphische Hervorhebung alternativ oder zusätzlich in gleicher Art und Weise auch in Bezug auf die der Maschineninterpretation 32 zugrunde liegende Graphik 30 erfolgt.

Das oben beschriebene Verfahren sowie einzelne Ausgestaltungen des Verfahrens kommen auch dann in Betracht, wenn keine Maschineninterpretation 32 als Ergebnis einer vorangehenden Texterkennung 60 vorliegt und eine vollständig manuelle Übernahme der in einer Graphik 30 enthaltenen Daten vorgesehen ist. Dann umfassen die in Figur 5 gezeigten Datensätze 62 kein jeweils erkanntes Zeichen 64 und auch keine Plausibilität 68 zur Erkennungssicherheit des jeweiligen Zeichens 64, sondern nur Positionsinformationen 66. Mit diesen Positionsinformationen 66 kann - wie oben beschrieben - automatisch eine Synchronisation eines Textcursors 54 in einem Eingabefeld und eines Graphikcursors 56 relativ zu der Graphik 30 erfolgen, so dass eine einfache Übernahme der in der Graphik 30 enthaltenen Daten möglich ist. Dabei kann - ebenfalls wie oben beschrieben - auch eine automatische Skalierung der Graphik 30 insgesamt auf eine Breite eines Eingabefeldes oder eine segmentweise Skalierung der Graphik 30 in Bezug auf jeweils eine Zeichenbreite des Eingabefeldes erfolgen. Im Grunde ist die vollständig manuelle Übernahme der in einer Graphik 30 enthaltenen Daten ein Sonderfall einer Situation mit einer vorangehenden Texterkennung 60, bei der kein Zeichen 64 mit einer ausreichenden Sicherheit erkannt wurde, so dass in der Maschineninterpretation 32 jedes einzelne Zeichen 64 zu überprüfen ist.

Einzelne Aspekte des hier beschriebenen Ansatzes kommen auch in Betracht, wenn keine Eingabe erforderlich oder vorgesehen ist und damit keine synchrone Darstellung von Text-und Graphikcursor 54, 56 erfolgt. Ein Bespiel in dieser Hinsicht ist eine zufallsgesteuerte Überprüfung einer automatischen Formularauswertung. Dann kann einer für die Prüfung zuständigen Person am Anzeigegerät 48 eines Computersystems 40 eine Graphik 30 eines eingescannten Formulars 10 oder eines Teils eines eingescannten Formulars 10 und die jeweilige Computerinterpretation 32 angezeigt werden, wobei die oder jede aufgrund der Graphik 30 resultierende Computerinterpretation 32 und/oder die zugrunde liegende Graphik 30 mit einer dem jeweiligen Format entsprechenden Hervorhebung angezeigt wird. Das angezeigte Format ergibt sich - wie oben erläutert - aus einer dafür vorgesehenen Datenbasis 70 anhand einzelner Zeichen der Computerinterpretation 32. Die mit der Prüfung befasste Person wird auf diese Weise in ihrer Aufgabe unterstützt, indem die Hervorhebung des jeweiligen Formats die Orientierung in einer viele Zeichen umfassenden Graphik 30 und/oder der darauf basierenden Computerinterpretation 32 erleichtert.

Wenn es sich bei den Formularen 10 um Überweisungsträger handelt, ist üblicherweise vorgesehen, dass diese gescannt werden und diejenigen Formulare 10, deren Daten nicht vollständig mittels der Texterkennung 60 erkannt wurden, einer manuellen Prüfung zugeleitet werden. Eine solche manuelle Prüfung durch einen menschlichen Benutzer eines Computersystems 40, wie in Figur 4 gezeigt, erfolgt üblicherweise oder vorteilhaft zweistufig, also zunächst durch einen ersten Benutzer und dann durch einen gleichsam als letzte Instanz fungierenden zweiten Benutzer, so dass ein Vier-Augen-Prinzip realisiert ist. Dabei werden dem ersten Benutzer automatisch die Graphik 30 und die resultierende Maschineninterpretation 32 so wie oben beschrieben am Anzeigegerät 48 des Computersystems 40 angezeigt. Der erste Benutzer prüft die Maschineninterpretation 32 und nimmt gegebenenfalls Korrekturen vor. Dem zweiten Benutzer werden automatisch die Graphik 30 und die vom ersten Benutzer geprüfte und gegebenenfalls korrigierte Maschineninterpretation 32 oder die Graphik 30 und die vom ersten Benutzer geprüfte und gegebenenfalls korrigierte Maschineninterpretation 32 sowie in einem weiteren Eingabefeld nochmals die geprüfte und gegebenenfalls korrigierte Maschineninterpretation 32 am Anzeigegerät 48 des Computersystems 40 angezeigt. In der Maschineninterpretation 32 oder, bei einer zusätzlichen Anzeige eines weiteren Eingabefelds, in dem weiteren Eingabefeld kann der zweite Benutzer Korrekturen anbringen, wenn sich ergibt, dass der erste Benutzer bei der Überprüfung der Maschineninterpretation 32 anhand der Graphik 30 Fehler gemacht hatte. Die automatische synchrone Darstellung des Text- und Graphikcursors 54, 56 erfolgt dann in Bezug auf die Graphik 30 und die vom ersten Benutzer geprüfte und gegebenenfalls korrigierte Maschineninterpretation 32 sowie gegebenenfalls das nur für den zweiten Benutzer zur Endkontrolle eingeblendete Eingabefeld.

Einzelne im Vordergrund stehende Aspekte der hier eingereichten Beschreibung lassen sich damit kurz wie folgt zusammenfassen: Angegeben werden ein Verfahren zum gleichzeitigen Darstellen einer Graphik 30 einer handschriftlichen Zeichenfolge und einer Maschineninterpretation 32 der Graphik 30 mittels eines Anzeigegeräts 48 eines Computersystems 40, wobei die Anzeige der Maschineninterpretation 32 über oder unter der Anzeige der Graphik 30 der handschriftlichen Zeichenfolge erfolgt, wobei die Maschineninterpretation 32 mittels des Computersystems 40 editierbar ist und beim Editieren an einer jeweiligen Eingabeposition ein Textcursor 54 dargestellt wird und wobei in der Graphik 30 der handschriftlichen Zeichenfolge an einer mit der Eingabeposition korrespondierenden Stelle ein Graphikcursor 56 angezeigt wird, sowie ein Computerprogramm 46 zur Implementierung des Verfahrens und schließlich auch ein Computersystem 40, das als Mittel zur Durchführung des Verfahrens ein in einen Speicher 44 des Computersystems 40 geladenes derartiges Computerprogramm 46 umfasst.

### Bezugszeichenliste

- 10: Formular
- 12-24: Textfeld (im Formular)
- 30: Graphik (als Ergebnis eines Scanvorgangs des Formulars oder eines Textfelds des Formulars)
- 32: Maschineninterpretation (der Graphik; zur Umsetzung der Graphik in elektronisch verarbeitbare alphanumerische und/oder numerische Zeichen sowie ggf. Sonderzeichen)
- 34: Breite eines Textfeldes / Breite der Graphik
- 36: Zeichenfeld innerhalb eines Textfeldes
- 40: Computersystem
- 42: Verarbeitungseinheit
- 44: Speicher
- 46: Computerprogramm
- 48: Anzeigegerät
- 50: Eingabegerät
- 54: Textcursor
- 56: Graphikcursor
- 60: Texterkennung
- 62: Datensatz
- 64: (erkanntes) Zeichen (der Graphik)
- 66: Positionsinformation (zu einem in der Graphik erkannten Zeichen)
- 68: Plausibilität (des erkannten Zeichens)
- 70: Datenbasis
- 72: Hervorhebung (Segmentgrenze)

## Patentansprüche

1. Verfahren zum gleichzeitigen Darstellen einer Graphik (30) einer handschriftlichen Zeichenfolge und einer Maschineninterpretation (32) der Graphik (30) mittels eines Anzeigegeräts (48) eines Computersystems (40),
wobei die Anzeige der Maschineninterpretation (32) über oder unter der Anzeige der Graphik (30) der handschriftlichen Zeichenfolge erfolgt,
wobei die Maschineninterpretation (32) mittels des Computersystems (40) editierbar ist und beim Editieren an einer jeweiligen Eingabeposition ein Textcursor (54) dargestellt wird und
wobei in der Graphik (30) der handschriftlichen Zeichenfolge an einer mit der Eingabeposition korrespondierenden Stelle ein Graphikcursor (56) angezeigt wird.

2. Verfahren nach Anspruch 1, wobei beim Editieren der Maschineninterpretation (32) und beim Verändern der Eingabeposition der Textcursor (54) an der neuen Eingabeposition und der Graphikcursor (56) an der mit der neuen Eingabeposition korrespondierenden Stelle angezeigt wird.

3. Verfahren nach Anspruch 1 oder 2,
wobei die Maschineninterpretation (32) das Ergebnis eines Texterkennungsverfahrens (60) ist und wobei das Texterkennungsverfahren (60) zu der Graphik (30) der handschriftlichen Zeichenfolge zumindest einen Datensatz (62) oder eine Folge von Datensätzen (62) zurückliefert,
wobei der oder jeder Datensatz (62) zumindest
ein erstes Datum zu einem erkannten Zeichen (64) und
ein zweites Datum mit einer Positionsinformation (66) zu einem dem erkannten Zeichen (64) zugrunde liegenden Abschnitt der Graphik (30) umfasst und
wobei der Graphikcursor (56) anhand der Positionsinformation (66) eines solchen Datensatzes (62) angezeigt wird.

4. Verfahren nach Anspruch 3,
wobei eine Breite einer Darstellung der Maschineninterpretation (32) auf dem Anzeigegerät (48) ermittelt wird,
wobei eine Breite der Graphik (30) der handschriftlichen Zeichenfolge ermittelt wird, insbesondere indem in den Datensätzen (62) eine kleinste und eine größte Positionsinformation (66) gesucht und daraus die Breite ermittelt wird,
wobei mit der Breite der Darstellung der Maschineninterpretation (32) und der Breite der Graphik (30) der handschriftlichen Zeichenfolge eine Skalierung der Graphik (30) der handschriftlichen Zeichenfolge erfolgt und
wobei die skalierte Graphik (30) der handschriftlichen Zeichenfolge mittels des Ausgabegeräts (48) über oder unter der Darstellung der Maschineninterpretation (32) angezeigt wird.

5. Verfahren nach Anspruch 3 oder 4,
wobei jeder einem aufgrund der Texterkennung (60) resultierenden Datensatz (62) zugrunde liegende Abschnitt der Graphik (30) der handschriftlichen Zeichenfolge einzeln in Bezug auf eine Breite der Darstellung eines Zeichens der Maschineninterpretation (32) skaliert wird.

6. Verfahren nach einem der Ansprüche 3, 4 oder 5, wobei Zeichen (64) mit einer Plausibilität (68) unterhalb eines vorgegebenen oder vorgebbaren Schwellwerts in der Anzeige der Maschineninterpretation (32) hervorgehoben dargestellt werden und wobei als anfängliche Eingabeposition die Position eines ersten Zeichens (64) mit einer Plausibilität (68) unterhalb des Schwellwerts verwendet wird.

7. Verfahren nach Anspruch 6, wobei bei einem mit einer Plausibilität (68) unterhalb des Schwellwerts erkannten Zeichen (64) das Zeichen (64) anhand einer Maschineninterpretation (32) weiterer Graphiken handschriftlicher Zeichenfolgen entsprechend einem dafür jeweils erwarteten Format näher bestimmt wird.

8. Verfahren nach einem der vorangehenden Ansprüche, wobei aus einer Datenbasis (70) Informationen zu einem erwarteten Format der jeweiligen handschriftlichen Zeichenfolge abgerufen werden und wobei bei der Anzeige der Graphik (30) einer handschriftlichen Zeichenfolge und/oder der zugehörigen Maschineninterpretation (32) eine dem jeweiligen Format entsprechende Hervorhebung (72) angezeigt wird.

9. Verfahren nach Anspruch 8, wobei die Information zu dem erwarteten Format anhand der Maschineninterpretation (32) abgerufen und beim Editieren der Maschineninterpretation (32) fortwährend aktualisiert wird.

10. Computerprogramm (46) mit Programmcodemitteln, um alle Schritte von jedem beliebigen der Ansprüche 1 bis 9 durchzuführen, wenn das Computerprogramm (46) mittels eines Computersystems (40) ausgeführt wird, insbesondere um die Maschineninterpretation (32) zu überprüfen und gegebenenfalls zu korrigieren.

11. Digitales Speichermedium mit elektronisch auslesbaren Steuersignalen, die so mit einer Verarbeitungseinheit (42) eines Computersystems (40) zusammenwirken können, dass ein Verfahren nach einem der Ansprüche 1 bis 9 ausgeführt wird.

12. Computersystem (40) mit einer Verarbeitungseinheit (42) und einem Speicher (44), in den ein Computerprogramm (46) nach Anspruch 10 geladen ist, das im Betrieb des Computersystem (40) durch dessen Verarbeitungseinheit (42) ausgeführt wird.
